**Europäisches Patentamt**

**European Patent Office**

**Office européen des brevets**

(11) Publication number: **0 179 596**
**A2**

## (12) EUROPEAN PATENT APPLICATION

(21) Application number: **85307315.3**

(22) Date of filing: **11.10.85**

(51) Int. Cl.⁴: **B 65 D 88/12**
**B 29 C 63/00**

(30) Priority: **16.10.84 GB 8426114**

(43) Date of publication of application:
**30.04.86 Bulletin 86/18**

(84) Designated Contracting States:
**DE FR GB IT NL**

(71) Applicant: **RAMCO OIL SERVICES plc**
**Hareness Circle Altens Industrial Estate**
**Aberdeen, AB1 4LY Scotland(GB)**

(72) Inventor: **Remp, Stephen Edward**
**Bourtie House Inverurie**
**Aberdeenshire Scotland(GB)**

(74) Representative: **Thiemann, Peter Albert William et al,**
**LLOYD WISE, TREGEAR & CO. Norman House 105-109**
**Strand**
**London WC2R 0AE(GB)**

(54) **Plant for coating pipe, tubing and the like.**

(57) Plant is described for coating the outside of pipe, tubing and the like. The plant is mobile and is housed in a plurality of standard I.S.O. shipping containers each of which mounts one or more of the plant items including inlet and outlet racks, an abrasive cleaning station, a coating station and conveyor means for conveying lengths of pipe, tubing and the like through the plant.

By disposing the plant in said containers, pipe, tubing and the like can be coated at remote locations where the pipe is to be used, thereby avoiding possible damage to coated pipe in transit.

**EP 0 179 596 A2**

Croydon Printing Company Ltd.

Title: <u>PLANT FOR COATING PIPE, TUBING AND THE LIKE</u>

This invention relates to plant for coating pipe, tubing or the like.

It is often necessary to coat the exterior of pipe, tubing or the like, such as used in the oil industry or chemical process industries, with corrosion resistant or insulating coatings which may comprise or consist of plastics material. Due to the uses to which such pipes and tubing are put or the situations in which they are disposed, it is of the utmost importance that the coatings should be coherent and adherent. That is to say the coatings should be free of discontinuities through which corrosive materials could reach the pipe and they should adhere at all places to the pipe. In order to promote these desiderata, it is necessary that the pipe should be clean and rust free before the coating is applied.

It is an object of the invention to provide a plant in which pipe, tubing or the like (hereinafter referred to as "pipe") can be coated in a simple and expeditious manner with a corrosion resistant or insulating coating which may be in the form of a plastics material or in the form of a tape.

According to the present invention there is provided plant for coating the outside of pipe, tubing and the like, characterised by the combination of a plurality of standard I.S.O. shipping containers each mounting one or more items for use in coating the outsides of said pipes, tubing and the like and adapted to be disposed in an operative arrangement with one another to constitute a self-contained plant which, by virtue of said containers, is mobile,

said items including:-

an inlet station with inlet rack means for receiving pipes, tubing and the like to be coated,

an abrasive cleaning station for cleaning the outside of a length of pipe, tubing and the like to be coated, a coating station for applying an exterior coating to a cleaned and heated length of pipe, tubing and the like, an outlet station with outlet rack means for receiving coated pipes, tubing and the like, and conveyor means arranged for conveying lengths of pipe, tubing and the like from the inlet station, through the abrasive cleaning station and the coating station to the outlet station,

there being openable sides to at least some of said containers and said inlet and outlet rack means being storable in one or more of said containers and erectable exteriorly of the containers to permit passage of said pipes, tubing and the like through said sides, when opened, on to and from said conveyor means. Preferably an inspection station is provided between the abrasive cleaning station and the coating station which is immediately preceded by the heating station, so that pipes which have been abrasively cleaned can be inspected and any which have not been sufficiently cleaned or which are found to be damaged can be removed for repair. The abrasive cleaning station may include a heater for heating the length of pipe to dry it before it is subjected to abrasive cleaning.

As indicated above, the whole plant is made portable and is contained in a number of standard

I.S.O. shipping containers which can be disposed in relation to one another and appropriately connected to provide an operative plant. The containers may be 20 foot (6.09m) or 40 foot (12.19m) containers, but a combination of both sizes of containers is often most convenient.

In general, most of the various plant items are effectively integral with the container so that it is merely necessary to position the containers appropriately and then connect them up. However, some items, particuarly racks for the inlet and outlet stations may be dismountable so that they can be stowed in one or more of the containers.

The pipe may be coated at the coating station with a fusion bonded epoxy resin coating. In this case the pipe is first heated at the heating station and is then immediately passed to the coating station where it is sprayed with an epoxy resin powder which fuses to the heated pipe. The coated pipe may then be cooled as by spraying it with water or in air. Alternatively, the pipe may be coated by wrapping around it polyethylene tapes comprising butyl rubber-based adhesives, several layers of such tapes being applied if so desired to the heated pipe.

In order to enable the invention to be more readily understood, reference will now be made to the accompanying drawings, which illustrate diagrammatically and by way of example an embodiment thereof and in which:-

Figure 1 is a plan view of plant for coating pipe, and

Figure 2 is an end view of the plant shown in Figure 1.

Referring now to the drawings, there is shown plant for coating pipe, tubing or the like with a coating of a fusion-bonded epoxy resin. The plant comprises an inlet station 1 in the form of rack bars 2 supported on vertical posts 3 for receiving lengths of pipe to be coated, a 40ft. (12.19m) length of pipe 4 and a 65ft. (19.81m) length of pipe 5 being shown on the rack bars. The rack bars 2 lead to an inlet conveyor 6 which is arranged to convey the pipes in their longitudinal direction. At the end of the rack bars 2, there are feed-in units 7 which are indicated diagrammatically and which consist of arms operable by pneumatic or hydraulic cylinders to lift the lengths of pipe one at a time over a stop and allow the length so lifted to roll down onto arms 8 of the conveyor which lower the length of pipe onto the conveyor. The conveyor 6 itself comprises a series of pairs of pneumatic tyres 9 which are driven in rotation and mounted so that their angle of inclination to the pipe axis can be varied. To this end the tyres are mounted in pairs on structural steel frames which are pivotal about their centres to increase or decrease the angle of inclination, the frames being interconnected by a common bar which ensures that the tyres are all set at the same angle. The pipe length to be coated is cradled by the pairs of tyres which rotate the pipe and translate it in its axial direction. The means for driving the tyres is adjustable to vary the speed of translation and rotation and the tyres can be adjusted towards or away from the centre of the conveyor to accommodate different sizes of pipe.

The conveyor 6 serves to convey the lengths of pipe in turn through a heater 10 for drying the pipe, the heater consisting of a refractory lined steel shell heated by a diesel burner, and through an abrasive cleaning station 11. In the cleaning station, the outside of the pipe is abrasively cleaned by shot blasting using a conventional type of shot blasting machine together with a built in dust collector.

The pipes which have passed through the abrasive cleaning station are conveyed away by a further conveyor 12 which is in effect a continuation of the conveyor 6 and is constructed in the same manner. At the end of the conveyor 12 the lengths of pipe are lifted out of the conveyor by arms 14 operated by air cylinders and placed on an inspection rack 15 comprising a plurality of rack bars 16. The pipe lengths can then be indexed in turn by further feed in units 17 to an inspection station 18 where each length is supported in pairs of turning rolls 19 and can be inspected for defects in the surface of the pipe which would make it unsuitable for coating. If the pipe is unsuitable for coating then a set of discharge rollers 20 are operated to elevate the pipe so that it can be pushed out of the plant to a reject conveyor 21 which conveys the pipe away for repair.

However, if the pipe is acceptable, it is passed from the inspection station 18 to a further conveyor 22 similar to the conveyor 15, but, as shown, serving to convey the pipes in the opposite direction to the conveyor 15. The conveyor 22 is arranged to convey the pipes in turn through another heating unit 23 which is in the form of a high frequency induction heater where the pipes are heated to about 238°C. The pipes leaving the heating unit 23 pass through a spray coating booth 24 where the hot pipes are sprayed electrostatically with an epoxy resin powder which forms a fusion-bonded coating of epoxy resin on the exterior of the pipe.

On leaving the spray coating booth 24, the pipe is passed to a cooling station 25 and then to an outlet station 26 where it is lifted by arms 27 from a conveyor 28, similar to the conveyor 6, on to padded rack bars 29 at the outlet station.

At the cooling station, the pipe leaving the booth 24 traverses a gap which allows the pipe to cool and the coating to gel. The pipe is then engaged by two spaced pairs of pneumatic tyres 30 similar to those forming part of the conveyors 6, 12, 22 and 28, but which run in water baths so that they will not damage the coating. The pipe then passes through a quench station 31 where it is sprayed with water before passing to the outlet station. At the quench station, the temperature of the pipe is reduced to a temperature which lies between 38 and 49°C. and at the outlet station the pipe is inspected before removal for use.

As indicated above the speeds of operation of the conveyors 6, 12, 22 and 28 are variable and preferably they are operable to translate the pipes at a constant speed for cleaning or coating and at a higher speed. In the operation of the plant, a first length of pipe is fed to the conveyor 6 and conveyed towards the cleaning station 11. When this length of pipe has cleared the inlet station, a second length is fed to the conveyor 6 which is then operated at the higher speed until the leading end of the second length contacts the trailing end of the first length so that the lengths are butted end-to-end as they pass through the cleaning station. After the first length has traversed the cleaning station, it may then be accelerated away at the higher speed so that it can be removed from the conveyor 12 before the second length is ready to be removed for inspection.

In a like manner, the ends of two lengths of pipe can be butted up for their passage through the spray coating booth and separated for removal at the outlet station.

The plant shown in the drawing is made portable and is capable of being packed and transported in eight standard 40 ft. I.S.O. steel shipping containers A to H and in seven standard 20 ft. I.S.O. steel shipping containers J to P. The first container A houses part of the conveyor 6, which is in two parts a first one of which is built into the container and the second of which is demountable from the container and can be aligned with the first part. At its side. the container A has a horizontally hinged door 32 to permit the lengths of pipe to be fed to the conveyor. The container A also houses the heater 10. The container A is followed by a 20 ft. container J, stood on end, which houses the shot blasting machine, dust collector and ancilliary equipment constituting the abrasive cleaning station. The conveyor 12, which again is in two parts is housed in and built into two 40 ft. containers B and C also provided with horizontally hinged doors 33 to enable the cleaned lengths of pipe to be passed to the inspection station. Two similar 40 ft. containers D and E house the conveyor 22, while the heating unit 23 and the spray coating booth and their ancilliary equipment are noused respectively in two 20 ft. containers K and L. The cooling station 25 and the water quench station are housed in two further 20 ft. container M and N while the conveyor 28 is housed in two 40 ft. containers G and F similar to the containers B and C or D and E. A 40 ft. container H houses a generator for providing all the electrical power required for driving the plant as well as a fuel tank, while a 20 ft. container P contains all the power distribution equipment, switches, transformers and other ancilliary equipment for the plant.

The inspection station 18 and the inspection racks 16 can, if desired be covered by a pitched roof 34 carried on supports 35 so that they form together with the containers B to E a covered building in which inspection can be carried out.

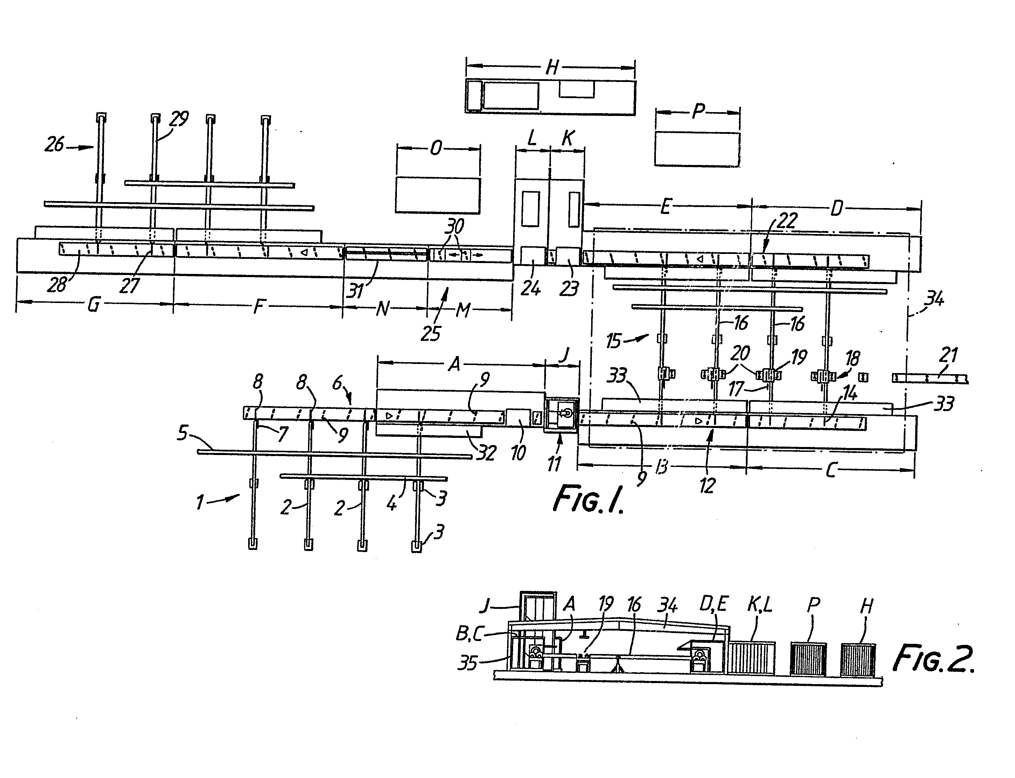

It is clear from the drawings that most of the plant items, such as conveyors, and the heating, abrasive cleaning, coating and cooling stations are effectively integral with their respective containers by being built into the containers. However, items such as the inlet, outlet and inspection racks essentially comprise a number of elongated members, and the items constituting the pitched roof and its supports can be stored in some of the containers. Thus, the plant as shown in Figures 1 and 2 can be dismounted and packed into the various containers which can then be transported to a new site where the plant can be reassembled. This can be of particular importance when the coated pipe is required in remote locations, since the pipes can be transported uncoated to the site and coated on site so that possible damage to the coatings which is almost inevitable in transit is avoided.

It will be appreciated that many modifications of the plant can be made, depending upon the lengths of the pipes to be treated and the nature of the material with which they are to be coated. In one modification two of the heating units 23 in two containers are provided one after the other and this enables the throughput to be substantially doubled.

It may also be desirable to modify the conveyors 6, 12, 22 and 28 by providing, between the pairs of tyres, additional driven or undriven rollers to support the pipe, particularly if it is thin-walled or flexible.

If the pipe is to be coated with a tape, then the spray coating booth 24 is replaced by a tape stand which is adapted to wind an insulating or protective tape around the pipe. Such tape stands are known and may comprise two tape rolls which are mounted on two arms fixed on a beam which can be turned by a hand crank to place each roll in a dispensing position. Individual mechanical brakes mounted on the arms provide sufficient tension to ensure traction for tension rollers which are rubber covered rollers connected to a hydraulic brake. The tension applied to the tape as it passes through these rollers is constant but can be adjusted. A pressure gauge is provided for indicating the tension settings so that they are easily repeatable.

It may be necessary to provide above the conveyor an assembly to hold the length of pipe in position and prevent it from being lifted off the conveyor by the tension of the tape. The plant may be adapted to wrap in known manner, heat-shrinkable polyethylene inner and outer tapes about the pipe, using two tape stands housed in one of the containers. As each tape is applied to the heated pipe, it melts and the polyethylene becomes intimately bonded to the pipe surface.

While the present plant has been described using shot blasting to clean the exterior of the pipe at the abrasive cleaning station, it will be appreciated that other abrasive cleaning means may be employed such as grit, sand or other abrasive material. Furthermore, it is possible to use wire brushes for cleaning the exteriors of the pipes although these may not always be so desirable since it is necessary to provide the exterior of the pipe with a clean surface free of dirt, dust, grit, rust, grease or other foreign substances, so that it is possible to apply to the surface a holiday-free coating.

Claims:

1.     Plant for coating the outside of pipe, tubing and the like, characterised by the combination of a plurality of standard I.S.O. shipping containers each mounting one or more items for use in coating the outsides of said pipes, tubing and the like and adapted to be disposed in an operative arrangement with one another to constitute a self-contained plant which, by virtue of said containers, is mobile,

said items including:-

an inlet station with inlet rack means for receiving pipes, tubing and the like to be coated,

an abrasive cleaning station for cleaning the outside of a length of pipe, tubing and the like to be coated,

a coating station for applying an exterior coating to a cleaned and heated length of pipe, tubing and the like,

an outlet station with outlet rack means for receiving coated pipes, tubing and the like, and conveyor means arranged for conveying lengths of pipe, tubing and the like from the inlet station through the abrasive cleaning station and the coating station to the outlet station,

there being openable sides to at least some of said containers and said inlet and outlet rack means being storable in one or more of said containers and erectable exteriorly of the containers to permit passage of said pipes, tubing and the like through said sides, when opened, on to and from said conveyor means.

2.      Plant as claimed in Claim 1, wherein an inspection station is provided between the abrasive cleaning station and the coating station, there being means at said inspection station for the rejection of unsatisfactory lengths of pipe, tubing and the like.

3.      Plant as claimed in Claim 1 or 2, wherein the abrasive cleaning station includes a heating station for drying a length of pipe, tubing and the like prior to the abrasive cleaning.

4.      Plant as claimed in any one of Claims 1 to 3, wherein the abrasive cleaning station is adapted to spray grit, sand, shot or like abrasive material to clean the outsides of the pipes, tubing and the like.

5.      Plant as claimed in any one of Claims 1 to 4, wherein the coating station includes a heating station.

6.      Plant as claimed in Claim 5, wherein the coating station comprises means for spraying a length of pipe, tubing and the like heated in the heating station with a heat-fusible plastics or resin powder.

7.      Plant as claimed in Claim 5, wherein the coating station comprises means for wrapping one or more tapes of heat-fusible plastics or resin material about a length of pipe, tubing or the like heated in the heating station.

8.      Plant as claimed in  Claim 6 or 7, wherein the coating station is followed by a cooling station.

9.      Plant as claimed in Claim 8, wherein the cooling station includes a quench station at which the coated length of pipe, tubing or the like is sprayed with water or air.

10.     Plant as claimed in any one of Claims 1 to 9, wherein the conveyor means includes a plurality of pairs of pneumatic tyres arranged in series and arranged to cradle a length of pipe, tubing or the like, the tyres being capable of being set at an angle to the axis of said length and being rotatable thereby to translate said length in its axial direction.

FIG.I.

FIG.2.

1/1

0179596